# EUROPEAN PATENT SPECIFICATION

(11) **EP 0 904 921 B1**
(45) Date of publication and mention of the grant of the patent: **16.04.2003**
(21) Application number: 98830504.1
(22) Date of filing: 13.08.1998
(51) Int. Cl.: B29C 45/14

(54) **Process and apparatus for forming a coating on a pole or similar object, such as a broom handle**
Verfahren und Vorrichtung zum Formen einer Beschichtung auf einem Schaft oder ähnlichem Objekt, wie ein Besengriff
Procédé et dispositif pour mouler un revêtement sur une tige ou objet similaire, tel qu' une manche de balai

(30) Priority: 22.08.1997 IT FI970203
(43) Date of publication of application: 31.03.1999
(73) Proprietor: Celestino, Niccolai, 51036 Larciano (Pistoia) (IT)
(72) Inventor: Celestino, Niccolai, 51036 Larciano (Pistoia) (IT)
(74) Representative: Mannucci, Gianfranco, Dott.-Ing.

(56) References cited:
- DE-A- 2 223 199
- DE-A- 4 430 738
- US-A- 2 604 661
- US-A- 3 259 680
- PATENT ABSTRACTS OF JAPAN vol. 95, no. 9, 31 October 1995 & JP 07 156190 A (SEKISUI CHEM CO LTD), 20 June 1995
- PATENT ABSTRACTS OF JAPAN vol. 11, no. 258 (M-618), 21 August 1987 & JP 62 064519 A (ASHIMORI IND CO LTD), 23 March 1987

## Description

The invention relates to an apparatus for producing a coating on a pole or similar object, such as a broom handle or other article.

A broom handle or other equivalent pole or similar object - of metal or wood - should preferably be coated to make it more pleasant to hold in the hands that have to manipulate the handle or other object. Existing coatings include injection-molded coatings of an expanded material such as expanded polyurethane or other material which is injection-molded in the form of two components that react inside the mold to form the open- or closed-cell material that will form the coating. These solutions have little to recommend them from the industrial point of view because the process is a slow one in which the two components have to be reacted together to obtain the thickness of expanded polyurethane or similar material inside the mold before the pole or handle can be withdrawn from the mold, and also because the raw materials required are not cheap. The material that forms the coating is not particularly hard-wearing, being a cellular, i.e. expanded, material and therefore not well able to withstand wear and use.

Another method has been to form a coating by fitting the pole in question with a more or less shaped tubular component which is molded separately and then has to be fitted to the pole; this is a very expensive process and not very satisfactory as the tubular coating fitted on the pole tends to rotate and slide for precisely the same reasons for which it is being fitted to the pole. As a result, therefore, working with a pole whose coating does not stick to the surface of the pole itself remains a difficult and clumsy task.

The US Pat. n. 3.259.680 describes a process and a mold for forming a coating on a pole or similar object.

The subject of the invention is a mold for producing a coating on a pole or similar object, as disclosed in the main claim.

A clearer understanding of the invention will be gained from the description and accompanying drawing, the latter showing a practical and non-restrictive example of the invention. In the drawing:
Figs. 1, 2 and 3 show a mold with the pole inside it and the injected coating, in longitudinal section and in cross sections on II-II and III-III as marked in Fig. 1;
Figs. 4, 5 and 6 show the mold open and closed in the section corresponding to that of Fig. 2 and in the section corresponding to that of Fig. 3;

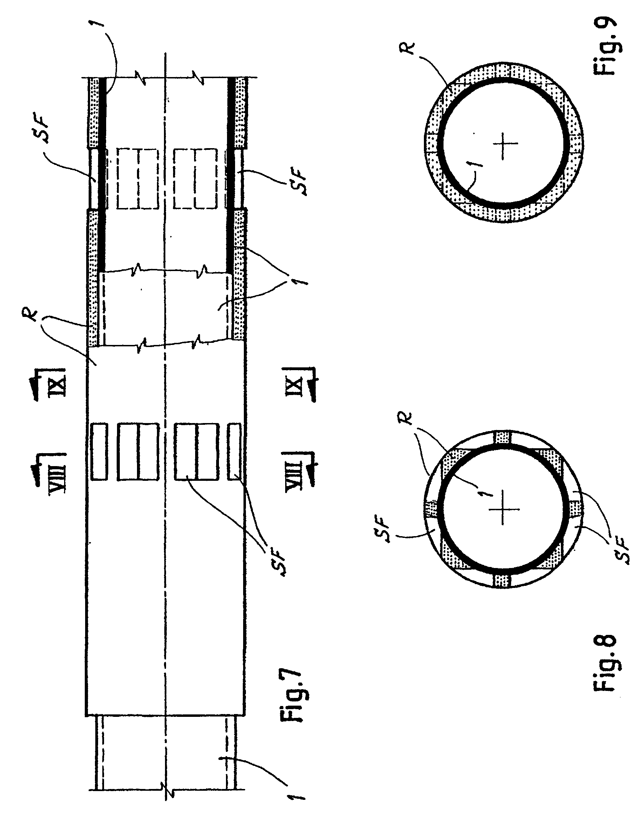

Figs. 7, 8 and 9 show a portion of a pole with the coating, in an external view partially sectioned on an axial plane, and on sections VIII-VIII and IX-IX as marked in Fig. 7; and
Figs. 10 and 11 show in a view and partial section one end of the pole, in the mold and taken out of the mold.

As illustrated in the accompanying drawing, 1 denotes a pole or similar object, which may be a cylindrical object of wood or (as in the drawing), a tubular object, generally of metal rather than synthetic resin for reasons of strength and relatively low weight. A tubular metal pole or similar object 1 must also not be too thick in order to reduce costs and weight for its use in hand utensils with a pole for a handle that may have to be relatively long and therefore must not be made heavy by unnecessary thickness, in order to avoid excessive weight which would make it difficult for the user to handle. A pole or similar object of this type - whether of wood or tubular metal of little thickness - tends to flex elastically in response to lateral loads of a certain magnitude. This can lead to permanent deformation of the pole or similar object or of its coating when said pole or similar object is put through some kind of operation to provide it with such a coating.

The invention does not employ an in-situ production process in which two-component materials are reacted together to produce foamed coatings of expanded polyurethane or the like, which do not generate loads against a surface running through the cavity of the mold but which do have a very long production time and therefore a high cost, quite apart from the cost of the raw materials; instead the invention involves an injection of a thermoplastic material which must be injected at a high pressure into a mold, such as polypropylene or the synthetic thermoplastic rubbers or other equivalent materials.

The invention involves making the coating for a tubular object such as object 1 by a process of direct injection of a thermoplastic resin at high pressure into a mold in which said pole or similar object 1 is positioned. The coating must of course extend some distance in the longitudinal direction in order to serve as a grip for a coated handle at positions which may be very different and some distance away from each other; consequently the coating must extend lengthwise along the pole or similar object 1.

For direct injection around the object 1, the object must be positioned in the mold and must pass along the mold cavity which is responsible for the external form of the final coating. It is necessary that a long section of the pole or similar object be positioned in said cavity and it can be supported at either end of the longitudinal cavity in which the coating is to be formed or it may actually project out of said cavity, if the coating is also to form a termination on the end of the pole. It follows from this that the pole or similar object experiences large sideways loads during the injection process, however many injection nozzles there are, and however these nozzles are positioned. What is more, since the injected material tends to cool rather rapidly, injection pressures must be high, and this greatly increases the loads created by the injected material in the object projecting into the injection cavity. In order to prevent the pole from deforming, the mold, which has two halves V1 and V2 defining the cavity C when brought together, contains projections S in the cavity C that extend far enough to come into contact with the outer surface of the pole or similar object 1 when the latter is positioned between the two closed halves V1 and V2 of the mold so as to pass through the cavity C. In this way the projections S, which may extend in rings around two circumferences of the cavity C, form a support or several supports acting as dividers between the support points illustrated by the ends C1, C2 of the mold cavity, when the coating is to be produced along the pole or similar object 1.

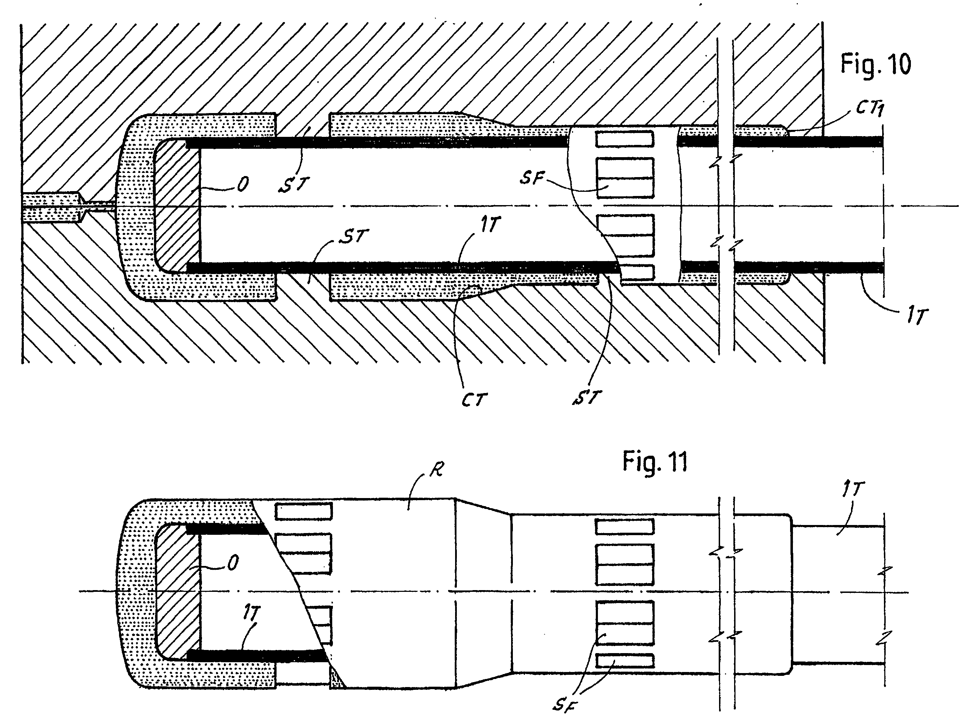

If (see Figs. 10 and 11) the pole or similar object 1 is to have a coating RT that also forms a termination for the pole, the projections ST inside the cavity CT for producing this termination are at intermediate positions because the pole or similar object 1T is supported cantilever-fashion beyond the end CT1 of the cavity CT from which said pole or similar object 1T projects cantilever-fashion.

Whatever arrangement is adopted, the presence of the projections S or ST provides advantageous dividers which position the pole or similar object 1 even at quite close distances. This ensures the stability of the position of the pole or similar object 1, which between the relatively close supports provided for it remains sufficiently rigid and is not in danger of being deformed by the lateral loads resulting from the injection of the thermoplastic material - even at high pressures - for the production of the coating between the cavity C or CT and the pole or similar object 1.

If a termination is to be produced in the form of coating on the end of the pole or similar object 1 or 1T and the latter is tubular, a suitable plug O (Figs. 10, 11) must be fitted to the end of the pole and must be sufficient to prevent the injected material from entering the interior of the tube of the object 1; this plug O is subjected to the force of the material and hence the very pressure exerted on it by the material keeps it in position and so prevents penetration and a consequently defective object.

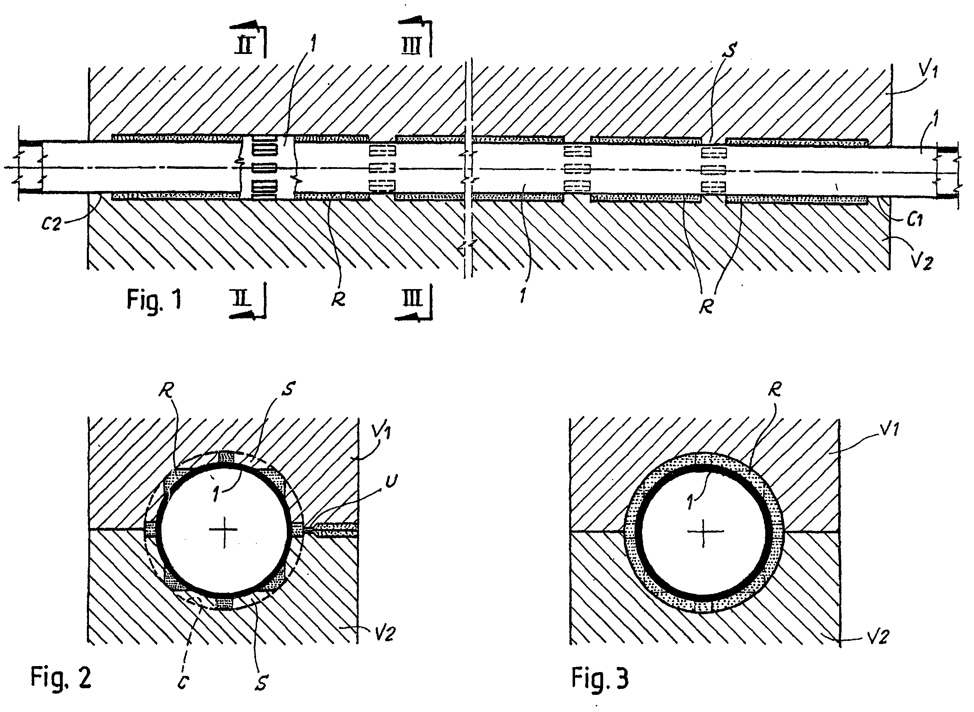

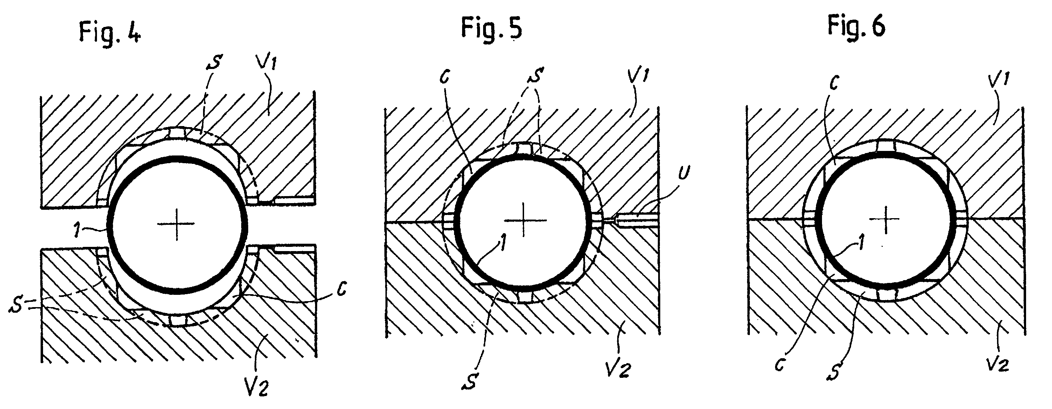

The projections S may be distributed as appropriate bearing in mind the need both for an appropriate frequency of the supports which the projections represent for the pole or similar object 1, and also of allowing the material to move with sufficient ease along the spaces it is to fill, which are relatively thin, since the coating must be of limited dimensions if it is to serve as a grip and also for reasons of weight and cost; if the projections are arranged in circular rings, these projections will be suitable distanced apart to ensure that the material can flow lengthwise. The projections will also be shaped in such a way as to allow for demolding by opening the mold, as can be seen in particular in the sections shown in Figs. 4 and 5. The injection nozzles U may be positioned either in the halves of the mold such as V1 and V2, or also may be located in the joining plane or more generally in the mating surfaces between said two halves, as indicated by the letter U in Figs. 2 and 5.

The coating R produced by the process and with the apparatus described above includes openings SF, created by the projections S, which may also have decorative functions; the coating R remains stuck exactly as required to the pole or similar object 1 - whether this is of wood or a metal tube and even if the surfaces are painted - not so much because of direct adhesion between the surface of the pole or similar object and the material of the coating R produced by injection of polypropylene or thermoplastic rubber or other equivalent material, but also and more especially because said material has physical characteristics such that it tends to shrink on cooling and therefore automatically clamps onto the pole or similar object, creating a contact pressure on the surface of this object which is perfectly sufficient to prevent the coating from sliding axially or rotating about the pole or similar object. The coating may be produced in thicknesses of the order of between 2 and 2.5 mm, and in practice of the order of 2.2 mm and not less, as the injected material must not cool too quickly as it flows along the cavity between the mold and the object contained inside it; in addition, the material must not be injected at temperatures above certain limits so as not to damage the surface of the pole or similar object, especially (for example) the paint applied to this object, given the fact that the paint is visible through the openings SF defined by the projections such as S of the mold.

The projections S of the mold and therefore the openings SF that appear in the coating R may also be so produced as to create a decoration or some suitable indication. Besides this, other decorations and, optionally, inscriptions that may be desired and that do not interfere with the palm of the hand when gripping the coating may also be created, by shallow depressions, in the thickness of the coating R.

It should be understood that the drawing shows only an example as a practical demonstration of the invention, and that said invention may be varied in shapes and arrangements without thereby departing from the scope of the concept on which said invention is based. The presence of any reference numerals in the appended claims is for the purpose of facilitating the reading of the claims with reference to the description and drawing, and does not limit the scope of protection represented by the claims.

## Claims

1. Mold for forming a coating around a pole or similar object having a substantially circular section, such as a broom handle, which is arranged through the mold designed to define a space around said object for the injection of a thermoplastic resin such as polypropylene, thermoplastic rubber or the like, and spaced out dividers are provided in the mold cavity in order to prevent said pole or similar object being deformed during the injection of the material,
**characterized in that**, said mold consists of two half molds separated along a joining plane passing through the axis of said object, and comprises in the cavity of the mold projections that are fixed and so shaped as to avoid undercuts on which to support and center the pole or similar object, which projections are separated from each other to allow the passage and distribution of the injected material.

2. Mold according to claim 1, **characterized in that** said projections are arranged in at least one circumferential alignment.

3. Mold according to claim 1 or 2, comprising shaped projections on the internal surface of the mold in order to form decorations and/or inscriptions, **characterized in that** said shaped projections extend as far as the surface of the pole or similar object positioned through the mold, correspondingly shaped parts of said surface thus being visible through the depressions in the injected coating.

## Patentansprüche

1. Form zum Bilden einer Beschichtung auf einer Stange oder einem ähnlichen Gegenstand mit kreisrundem Querschnitt, wie z.B. in einem Besenstiel, welcher durch die Form durchgehend angeordnet wird, die einen Raum um den Gegenstand herum definiert für das Einspritzen eines thermoplastischen Harzes wie Polypropylen, thermoplastischem Kautschuk od. dgl., wobei beabstandete Teiler in der Formkavität vorgesehen sind, um eine Verformung der Stange oder des ähnlichen Gegenstandes während des Einspritzens des Materials zu verhindern,
**dadurch gekennzeichnet, dass** die Form aus zwei Formhälften besteht, die längs einer Verbindungslinie getrennt sind, die durch die Achse des Gegenstandes verläuft, und in der Formkavität befestigte und zur Vermeidung von Hinterschneidungen geformte Vorsprünge aufweist, die die Stange oder den ähnlichen Gegenstand stützen und zentrieren, wobei die Vorsprünge voneinander getrennt sind, um den Durchschnitt und die Verteilung des eingespritzten Materials zu ermöglichen.

2. Form nach Anspruch 1,
**dadurch gekennzeichnet, dass** die Vorsprünge in mindestens einer in Umfangsrichtung fluchtenden Anordnung angeordnet sind.

3. Form nach Anspruch 1 oder 2,
mit geformten Vorsprüngen an der Innenfläche der Form zur Bildung von Ornamenten und/oder Beschriftungen, **dadurch gekennzeichnet, dass** die geformten Vorsprünge sich bis zur Oberfläche der Stange oder des ähnlichen, durch die Form durchgehend angeordneten Gegenstandes erstrecken, so dass entsprechend geformte Teile der Oberfläche durch die Vertiefungen in der spritzgegossenen Beschichtung sichtbar sind.

## Revendications

1. Moule pour former un revêtement autour d'une tige ou d'un objet similaire ayant une section sensiblement circulaire tel qu'un manche à balai, qui est agencé à travers le moule conçu pour définir un espace autour dudit objet pour l'injection d'une résine thermoplastique telle que du polypropylène, du caoutchouc thermoplastique ou analogue; et des diviseurs espacés sont prévus dans la cavité du moule pour empêcher ladite tige ou objet similaire d'être déformé au cours de l'injection de la matière, **caractérisé en ce que** ledit moule consiste en deux moitiés de moule séparées le long d'un plan de jonction traversant l'axe dudit objet et comprend dans la cavité du moule des saillies qui sont fixées et formées pour éviter les contre-dépouilles, saillies destinées à supporter et centrer la tige ou objet similaire, lesquelles saillies sont séparées l'une de l'autre pour permettre le passage et la répartition do la matière injectée.

2. Moule selon la revendication 1, **caractérisé en ce que** lesdites saillies sont disposées dans au moins un alignement circonférentiel.

3. Moule selon la revendication 1 ou 2, comprenant des saillies formées sur la surface interne du moule pour former des décorations et/ou des inscriptions, **caractérisé en ce que** lesdites saillies formées s'étendent jusqu'à la surface de la tige ou objet similaire positionné à travers le moule, des pièces formées de façon correspondante de ladite surface étant ainsi visibles à travers les dépressions dans le revêtement injecté.
